# EUROPEAN PATENT APPLICATION

(11) **EP 4 269 326 A1**
(43) Date of publication of application: **01.11.2023**
(21) Application number: 21915343.4
(22) Date of filing: 28.12.2021
(51) Int. Cl.: B67D 1/10, C02F 1/68, F04B 43/12, F04C 5/00

(54) **WATER SUPPLY DEVICE**

(30) Priority: 28.12.2020 JP 2020219551
(71) Applicant: Suntory Holdings Limited, Osaka 530-8203 (JP)
(72) Inventor: YAMASHITA, Takafumi, Kawasaki-shi, Kanagawa 211-0067 (JP)
(74) Representative: Vossius & Partner Patentanwälte Rechtsanwälte mbB
(86) International application number: PCT/JP2021/049001
(87) International publication number: WO 2022/145485

(57) **Abstract**

This water supply device (100), having an additive liquid holding part (104) and an additive liquid supply means (10), comprises a detector (108) which detects water circulation inside a flow passage, wherein when the detector has detected water flow, an additive liquid is added into the flow passage from the supply means.

## Description

### FIELD

The present invention relates to a water supply device for adding an additive liquid such as a mineral concentrate to raw water such as tap water.

### BACKGROUND

In today's diversified society, the needs for consumption materials such as food and beverages are diversifying, and in recent years, consumer interest in drinking water has increased against the backdrop of health-consciousnesses and taste-consciousnesses. In response to such a trend, for example, Patent Literature 1 describes a water supply device which not only has a water purification function but also dispenses additives such as mineral components to water.

### [CITATION LIST]

### [PATENT LITERATURE]

[PTL 1] Japanese Unexamined PCT Patent Publication (Kohyo) No. 2007-537872

### SUMMARY

### [TECHNICAL PROBLEM]

Though attempts to add additives to water have been made for some time, the mineral balance required to achieve drinkable water is delicate, and it is necessary to improve the accuracy of the additives in order for this to stably be achieved. In particular when adopting an additive mechanism for a water purifier which is directly connected to the water supply, though a mechanism which allows the user to arbitrarily control the flow rate can also be adopted, in this case, it is difficult to adjust the additive concentration with high accuracy because the flow rate of the entire water flow is not constant or the discharge amount of the pump which supplies the additive liquid is not constant.

A technical object of the present invention is to solve such problems of the prior art, and an object of the present invention is to provide a water supply device which is capable of adjusting additive concentration with high accuracy to enable addition thereof to water.

### [SOLUTION TO PROBLEM]

In order to achieve the object described above, according to the present invention, there is provided a water supply device, comprising an additive liquid holding part, a water flow path to which the additive liquid is added, and an additive liquid supply means, the water supply device further comprising a detector which detects water flow in the flow path, wherein when the detector detects water flow, the additive liquid is added from the supply means.

### [ADVANTAGEOUS EFFECTS OF INVENTION]

According to the present invention, the additive liquid can be supplied in proportion to the flow rate of the raw water with a simple structure without installing a special measuring device such as a flow meter for measuring the flow rate of the raw water to which the additive liquid is to be supplied. Furthermore, since the structure is simple, the required power can be the minimum power such as a general battery, whereby the additive device itself can be made compact.

### BRIEF DESCRIPTION OF DRAWINGS

FIG. 1 is a block diagram of a water supply device according to a preferred embodiment of the present invention.
FIG. 2 is a partially cut-away perspective view showing a part of a housing of a tube pump.
FIG. 3 is a partially cut-away perspective view of a swing-type water flow detector.
FIG. 4 is a partially cut-away side view of the swing-type water flow detector of FIG. 3 when the opening/closing member is in the closed position.
FIG. 5 is a partially cut-away side view of the swing-type water flow detector of FIG. 3 when the opening/closing member is in the open position.

The preferred embodiments of the present invention will be described below with reference to the attached drawings.

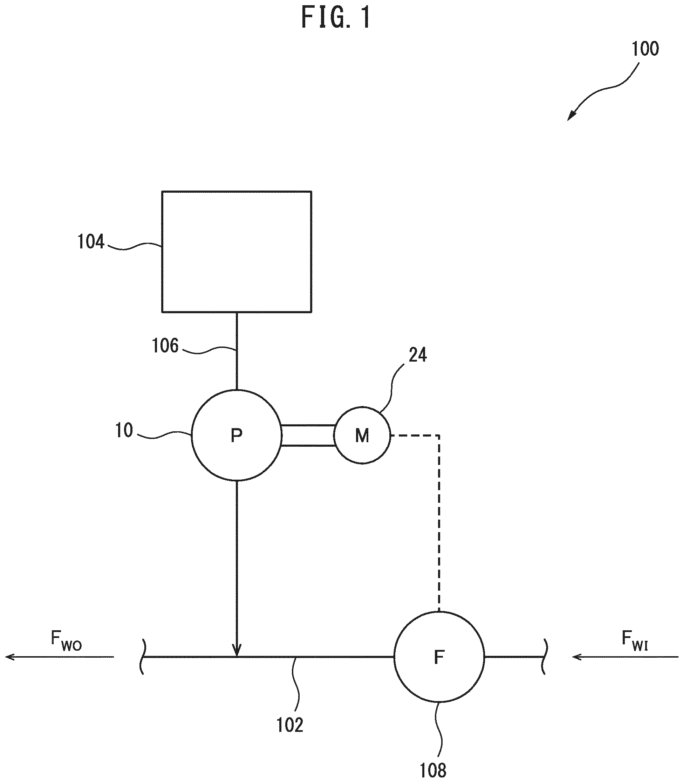

In FIG. 1, a water supply device 100 comprises a water supply conduit 102 for circulating tap water as raw water, a mineral source 104 connected to a tube pump 10 via a mineral liquid supply conduit 106, and a detector 108 for detecting whether or not water is flowing through the water supply conduit 102. The mineral source 104 can be, for example, a pouch-like container as a holding part for holding a concentrated liquid (mineral liquid) containing potassium chloride or a mineral component similar to potassium chloride, which are examples of the additive liquid.

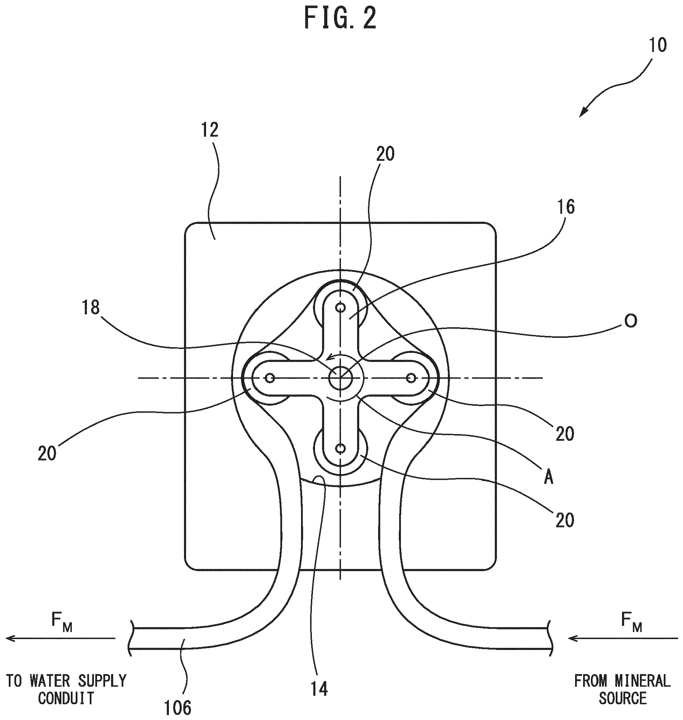

Referring to FIG. 2, the tube pump 10 comprises a housing 12 defining a pump chamber 14, and a rotor assembly disposed within the pump chamber 14. The pump chamber 14 has an inner peripheral surface extending circumferentially about the center O. The mineral liquid supply conduit 106 is located partially within the pump chamber 14. The mineral liquid supply conduit 106 is flexible at least in the portion located inside the pump chamber 14. In the pump chamber 14, the mineral liquid supply conduit 106 extends along the inner peripheral surface of the pump chamber 14.

The rotor assembly is arranged in the pump chamber 14 so as to be rotatable about the center O. The rotor assembly comprises a carrier 16 which is rotatable about the center O. The carrier 16 has a rotating shaft 18 extending along an axis passing through the center O perpendicular to the paper surface of FIG. 2. The carrier 16 has a plurality of arms, four in the example of FIG. 2, arranged at equal angular intervals relative to the center O, and a rotor 20 is attached to the tip of each arm. Each rotor 20 is attached to the tip of each arm so as to be rotatable around a rotating shaft 22 extending parallel to the rotating shaft 18.

The portion of the mineral liquid supply conduit 106 located within the pump chamber 14 is pressed against the inner peripheral surface of the pump chamber 14 by each rotor 20 and partially deformed. The shape (the number of arms) and dimensions of the carrier 16 and the dimensions of the rotor 20 can be appropriately determined in consideration of the flow rate of the mineral liquid to be added.

The tube pump 10 further comprises a drive motor 24 (FIG. 1) coupled to the rotating shaft 18. The drive motor 24 is preferably powered by replaceable batteries (not illustrated) or rechargeable batteries (not illustrated). When the detector 108 detects that water is flowing through the water supply conduit 102, the drive motor 24 is supplied with power from a power source (not illustrated) and driven to rotate. The number of revolutions of the drive motor 24 at this time can be appropriately determined in consideration of the flow rate of the mineral liquid to be added.

When the drive motor 24 rotates, the carrier 16 also rotates about the center O as indicated by arrow A. As a result, the portion of the mineral liquid supply conduit 106 pressed and deformed by the rotor 20 also moves in the direction of arrow A about the center O along the inner peripheral surface of the pump chamber 14. As a result, the mineral liquid is supplied from the mineral source 104 to the water supply conduit 102 through the mineral liquid supply conduit 106, as indicated by arrow FM.

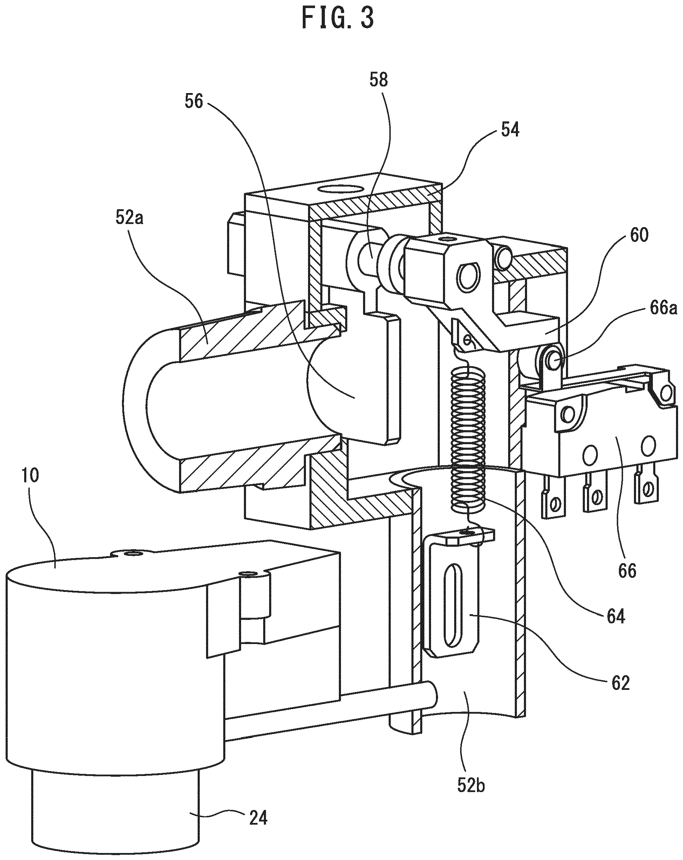

Referring to FIG. 3, a swing-type water flow detector 50 using a rotating opening/closing member is shown as an example of detector 108. The water flow detector 50 is disposed between an inlet conduit 52a and outlet conduit 52b forming the water supply conduit 102. The water flow detector 50 comprises, as primary constituent elements, an opening/closing member 56, a rotating shaft 58, a swing arm 60, a micro switch 66, and a hollow housing 54 which surrounds and houses the opening/closing member 56, the rotating shaft 58, and the swing arm 60.

The inlet conduit 52a and the outlet conduit 52b are coupled to the housing 54 so as to communicate within the housing 54. In the illustrated embodiment, the inlet conduit 52a and the outlet conduit 52b are perpendicular to each other, but the invention is not limited thereto, and they may be coupled to housing 54 at other angles.

Within the housing 54, the rotating shaft 58 extends along an axis Os perpendicular to both the inlet conduit 52a and the outlet conduit 52b. The rotating shaft 58 is attached to the housing 54 so as to be rotatable about the axis Os.

The opening/closing member 56 is coupled to the rotating shaft 58 so as to be capable of rotating therewith. The opening/closing member 56 is composed of a plate-like member which is capable of closing the inlet conduit 52a. The opening/closing member 56 is movable between a closed position and an open position by rotating about the axis Os. In the closed position, the opening/closing member 56 abuts the end surface of the inlet conduit 52a opening into the housing 54, and in the open position, the opening/closing member 56 is separated from the end surface of the inlet conduit 52a.

The swing arm 60 is also coupled to the rotating shaft 58 so as to be capable of rotating with the rotating shaft 58. The swing arm 60 is connected at one end to the rotating shaft 58 and extends vertically from the rotating shaft 58 in the manner of a cantilever beam. The micro switch 66 having an actuator 66a is arranged near the tip of the swing arm 60. In the micro switch 66, when force is applied to the actuator 66a in the downward direction of FIG. 3, this force is transmitted to the contacts of the micro switch 66, the micro switch 66 is closed (ON), and when the force applied to the actuator 66a is released, the micro switch 66 is opened (OFF). The opening/closing (ON/OFF) of the micro switch 66 may be reversed.

The micro switch 66 is positioned within the housing 54 relative to the swing arm 60 such that when the opening/closing member 56 is in the closed position, the swing arm 60 presses the actuator 66a to close (ON) the micro switch 66, and when the opening/closing member 56 is in the open position, the swing arm 60 is spaced from the actuator 66a and the micro switch 66 is opened (OFF).

If the weight of the opening/closing member 56 and the swing arm 60 prevents the swing arm 60 from fully pressing the actuator 66a of the micro switch 66, a biasing member may be provided to bias the swing arm 60 toward the actuator 66a. In the present embodiment, the biasing member comprises a helical spring 64. In FIG. 3, the helical spring 64 is arranged on the lower side of the swing arm 60, i.e., on the micro switch side, and is connected to the swing arm 60 at one end (the upper end in FIG. 3), and the other end (the lower end in FIG. 3) is connected to a bracket 62 which is affixed to the inner wall of the outlet conduit 52b. Thus, the tip of the swing arm 60 is always biased toward the actuator 66a of the micro switch 66.

The mode of operation of the present embodiment will be described below.

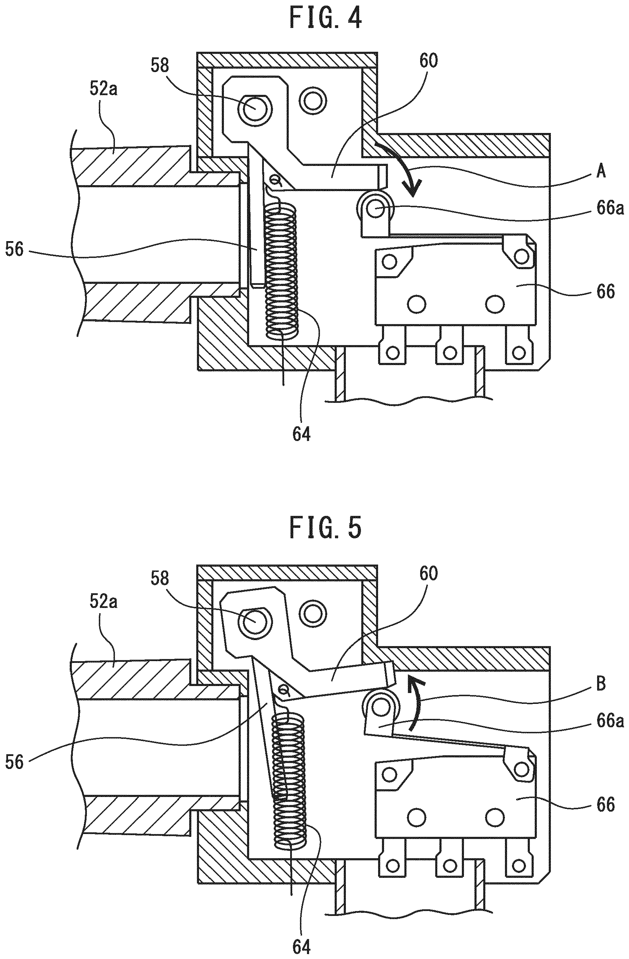

When water is not flowing through the water supply conduit 102, in particular, the inlet conduit 52a, the weight of the rotating shaft 58 and swing arm 60 and/or the elastic force of the helical spring 64 positions the opening/closing member 56 in the closed position as shown in FIGS. 3 and 4. At this time, the actuator 66a is pressed by the swing arm 60, and the micro switch 66 is closed (ON). As a result, it is detected that no water is flowing through the water supply conduit 102, the power supply to the drive motor 24 is cut off, and the tube pump 10 is stopped.

When water flows through the water supply conduit 102, in particular, the inlet conduit 52a, toward the housing 54, the water pressure causes the opening/closing member 56 to move away from the end surface of the inlet conduit 52a against the weight of the rotating shaft 58 and swing arm 60 and/or the elastic force of the helical spring 64, as shown in FIG. 5. Specifically, the opening/closing member 56 moves from the closed position to the open position. As a result, the swing arm 60 rotates upward about the axis Os together with the rotating shaft 58, counterclockwise in FIG. 3 (the direction indicated by arrow B), i.e., in the direction away from the micro switch 66. Thus, when the swing arm 60 separates from the actuator 66a, the micro switch 66 is opened (OFF). As a result, it is detected that water is flowing through the water supply conduit 102, power is supplied to the drive motor 24, and the tube pump 10 operates.

When the flow of water in the inlet conduit 52a stops, the weight of the rotating shaft 58 and swing arm 60 and/or the spring force of the helical spring 64 causes the swing arm 60 to rotate about the axis Os in the direction indicated by arrow A in FIG. 4. Thus, the actuator 66a of the micro switch 66 is pushed toward the body of the micro switch 66 by the swing arm 60. As a result, the micro switch 66 is closed (ON), it is detected that water is not flowing through the water supply conduit 102 as described above, the power supply to the drive motor 24 is cut off, and the tube pump 10 is stopped.

The spring constant and length of the helical spring 64, the inner diameter of the inlet conduit 52a, and the length of the swing arm 60 can be determined considering the flow rate and pressure of the water flowing through the inlet conduit 52a, as well as the force of the actuator 66a of the micro switch 66 pushing up the swing arm 60 so that the swing arm 60 presses and pushes down the actuator 66a when water is not flowing through the inlet conduit 52a, and the swing arm 60 can be separated from the actuator 66a when water is flowing through the inlet conduit 52a.

Though the detector 108 is a swing water flow detector 50 in the embodiment described above, a water flow detector having an impeller and a generator driven by the impeller, or a flow meter which measures flow rate based on differential pressure may be used.

The water supply device of the present invention can be incorporated into any drinking water supply system for providing drinking water, such as water servers and water purifiers. Even in such a case, since the water supply device of the present invention has a simple structure, the size of the installation area of the entire device can be reduced.

### REFERENCE SIGNS LIST

- 10: Tube Pump
- 12: Housing
- 14: Pump Chamber
- 16: Carrier
- 18: Rotating shaft
- 20: Rotor
- 22: Rotating shaft
- 24: Drive Motor
- 50: Water Flow Detector
- 52a: Inlet Conduit
- 52b: Outlet Conduit
- 54: Housing
- 56: Opening/Closing Member
- 58: Rotating shaft
- 60: Swing Arm
- 62: Bracket
- 66: Micro Switch
- 66a: Actuator
- 100: Water Supply Device
- 102: Water Supply Conduit
- 104: Holding Part
- 104: Mineral Source
- 106: Mineral Liquid Supply Conduit
- 108: Detector

## Claims

1. A water supply device, comprising:
an additive liquid holding part,
a water flow path to which the additive liquid is added, and
an additive liquid supply means, the water supply device further comprising:
a detector which detects water flow in the flow path, wherein when the detector detects water flow, the additive liquid is added from the supply means.

2. The water supply device according to claim 1, wherein the detector comprises an opening/closing member which opens or closes depending on water flow in the water flow path.

3. The water supply device according to claim 1 or 2, wherein the additive liquid supply means is a tube pump.

4. The water supply device according to claim 3, wherein the tube pump comprises a housing defining a pump chamber having a circumferentially extending inner peripheral surface, and a rotor assembly which is disposed within the pump chamber so as to be capable of rotating, and
a mineral liquid supply conduit extends along the inner peripheral surface of the pump chamber, the mineral liquid supply conduit is pressed and at least partially deformed against the inner peripheral surface of the pump chamber by the rotor assembly, and when the rotor assembly rotates, a portion which is deformed by the rotor assembly moves along the inner peripheral surface of the pump chamber so as to push out mineral liquid in the mineral liquid supply conduit.

5. A drinking water supply system, comprising the water supply device according to any one of claims 1 to 4.
